# EUROPÄISCHE PATENTSCHRIFT

(11) **EP 4 118 307 B1**
(45) Veröffentlichungstag und Bekanntmachung des Hinweises auf die Patenterteilung: **30.07.2025**
(21) Anmeldenummer: 21727349.9
(22) Anmeldetag: 11.03.2021
(51) Int. Cl.: F01K 13/02, F01K 25/06, F01K 25/04, F02C 3/00

(54) **VERFAHREN ZUR ERHÖHUNG EINES ENTROPIESTROMES AN EINER STRÖMUNGSMASCHINE**
METHOD FOR INCREASING AN ENTROPY FLOW IN A TURBOMACHINE
PROCÉDÉ POUR AUGMENTER LE DÉBIT ENTROPIQUE D'UNE TURBOMACHINE

(30) Priorität: 13.03.2020 DE 102020001778
(43) Veröffentlichungstag der Anmeldung: 18.01.2023
(60) Teilanmeldung: 23170993.2
(73) Patentinhaber: Schlegel, Peer, 09131 Chemnitz (DE)
(72) Erfinder: Schlegel, Peer, 09131 Chemnitz (DE)
(74) Vertreter: Findeisen Neumann Scheit Partnerschaft mbB
(86) Internationale Anmeldenummer: PCT/DE2021/000053
(87) Internationale Veröffentlichungsnummer: WO 2021/180261

(56) Entgegenhaltungen:
- WO-A2-2017/096280
- AT-A1- 506 353
- DE-A1- 102006 055 804
- DE-C1- 19 533 249
- GB-A- 2 528 522
- US-A- 3 972 195
- US-A- 4 008 573
- US-A- 4 485 629
- US-A1- 2012 006 022
- US-A1- 2015 030 438
- US-A1- 2019 017 411
- US-A1- 2019 128 148

## Beschreibung

Die Erfindung betrifft ein Verfahren zur Erhöhung des Wirkungsgrades einer Strömungsmaschine, wobei ein durch die Strömungsmaschine geführtes Fluid kinetische Energie an die Strömungsmaschine überträgt.

Thermodynamische Kreisprozesse werden in der Technik vielfältig zur Energieumwandlung genutzt. Bei den wichtigsten Prozessen für die öffentliche Energieversorgung wird der größte Teil der genutzten Energie immer noch aus fossilen Energiequellen gespeist wird, die über Millionen Jahre auf der Erde durch Photosynthese aufgebaut wurden. Dies wird mit steigendem Energiebedarf der Menschheit zunehmend zu einem Problem, da diese Energieressourcen nicht in gleicher Menge ersetzt werden können. Weiterhin verursacht die Nutzung dieser Energieformen hohe Umweltbelastungen. Daher müssen diese Energieformen zunehmend durch regenerative Energieformen ersetzt werden. Dies ist aber mit einer Reihe von Problemen verbunden.

Die zwei primären quasi unbegrenzten Energiequellen sind die Kernfusion auf der Sonne und die Kernspaltung im Erdinneren (Erdwärme). Sie treiben alle Energiekreisläufe auf der Erde an. Diese Energie kann dann auch sekundär, z.B. als Windkraft, Wasserkraft oder Geothermie, genutzt werden. Die jährlich freigesetzten primären Energiemengen sind mehr als ausreichend, um den Energiebedarf der Menschen zu decken. Sie stehen aber nicht an jedem Ort und zu jeder Zeit zur Verfügung. Weiterhin ist die Erschließung regenerativer Energiequellen oft mit hohen Kosten verbunden. Die hohe Energierückflusszeit und der geringe Erntefaktor sind eine Ursache für die weiterhin starke Nutzung fossiler Energiequellen.

Eine entscheidende Rolle spielen daher Prozesse zur Energiewandlung, Energiespeicherung und deren Wirkungsgrade. Für die Speicherung großer Energiemengen über einen längeren Zeitraum (> 6 Monate) ist bisher nur chemische Energie (z.B. Methan oder Wasserstoff) geeignet. Batteriespeicher besitzen zwar gute Wirkungsgrade, sind aber wegen der hohen Kosten und erforderlichen seltenen Materialien nur für mobile Geräte oder Tagesspeicher eine Alternative. Pumpspeicherkraftwerke sind nur in Gebieten mit großem Höhenunterschied einsetzbar. Thermische Energiespeicher bieten zwar theoretisch eine hohe Energiespeicherkapazität pro Volumen. Um diese in andere Energieformen umzuwandeln sind aber hohe Temperaturdifferenzen erforderlich. Dadurch erhöhen sich aber auch die thermischen Verluste. Thermische Speicher sind daher für den Ausgleich von Tagesschwankungen bei der Wärmeversorgung geeignet. Für die Umwandlung in andere Energieformen haben sie kaum Bedeutung, da der Wirkungsgrad bei der Energiewandlung gering ist.

Für die industrielle Energieversorgung kommen hauptsächlich thermodynamische Prozesse zum Einsatz, wobei das Optimierungspotential von Gas- oder Dampfkraftwerken begrenzt ist. Der maximale Wirkungsgrad ist durch die materialtechnisch erreichbare Höchsttemperatur und die Umgebungstemperatur begrenzt. Die Problematik bei der Energiewandlung mit thermodynamischen Prozessen zeigt sich besonders am Druckluftspeicherkraftwerk, das bisher keine kommerzielle Bedeutung erlangt hat. Bei der Verdichtung der Luft wird die thermische Energie erhöht. Da die verwendeten Erdspeicher nicht thermisch isoliert werden können, wird diese Energie als Verlust an die Umgebung abgeführt. Bei der Abgabe von Energie wird die komprimierte Luft wieder expandiert, wodurch es zu einer starken Abkühlung und Vereisung kommt. Hier fehlt die bei der Verdichtung abgegebene Energie und muss z.B. durch die Verbrennung von Erdgas ersetzt werden. Da für die Abgabe von Volumenarbeit immer eine Expansion erforderlich ist, wird bei allen thermodynamischen Prozessen eine hohe Temperaturdifferenz angestrebt.

Bei thermodynamischen Prozessen wird zwischen rechts- (Abgabe von Volumenarbeit, Wärmemotor) oder links-laufenden (Kältemaschinen, Wärmepumpen) Prozessen unterschieden.

Dem Wesen nach ist thermische Energie die Summe der Wirkungen verschiedener kinetischer Energieformen. Die (innere) Energie eines thermodynamischen Mikrozustandes besteht aus drei wesentlichen Anteilen, aus Energie der translatorische Bewegung Eₜᵣₐₙₛ, der Schwingungsenergie E_{vib} und der Rotationsenergie Eᵣₒₜ. Damit kann auch jeder Energieform ein entsprechender Anteil an der Gesamtentropie zugeordnet werden (*S_{ges} = S_{vib} + Sᵣₒₜ + Sₜᵣₐₙₛ*)*.*

E_{vib} ist bei Gasen relativ gering und kann meist vernachlässigt werden. Bei einatomigen Gasen dominiert Eₜᵣₐₙₛ. Im flüssigen Zustand wird Eₜᵣₐₙₛ= 0 und Eᵣₒₜ dominiert. Im festen Zustand ist auch keine Rotation der Moleküle möglich und die Gesamtenergie wird von E_{vib} bestimmt. Bei mehratomigen Gasen oder an den Grenzflächen zwischen Gasen, Flüssigkeiten und Festkörpern wechselwirken diese verschiedenen kinetischen Energieformen. Damit stellt sich ein dynamisches Gleichgewicht zwischen den kinetischen Energieformen ein.

Zur Verrichtung von Volumenarbeit ist nur der translatorische Anteil (Eₜᵣₐₙₛ) der inneren Energie direkt nutzbar. Sinkt jedoch der translatorische Impuls (pₜᵣₐₙₛ) wird Energie und Entropie der Vibration und Rotation auf die translatorische Bewegung übertragen. Die translatorische Energie und Entropie steigt wieder an und der Vibrations- und Rotationsanteil verringert sich. Der Impuls bestimmt die Richtung des thermischen Energieflusses. Er korreliert mit der Temperatur. Bei rechtslaufenden thermodynamischen Prozessen wird thermische Energie bei hohem translatorischen Impuls der Moleküle (hohe Temperatur) zugeführt und mechanische Energie abgegeben. Bei geringem Impuls.(niedrige Temperatur) wird thermische Energie abgeführt und mechanische Energie zugeführt. Wegen der Energie Impulsbeziehung wird damit mehr mechanische Energie abgegeben als zugeführt. Bei einer Wärmepumpe (linkslaufend) ist der Prozess invers. Damit muss dem Gesamtprozess mechanische Arbeit zugeführt werden. Das Verhältnis der Impulsintensität bestimmt damit auch den Wirkungsgrad.

Die Umwandlung von thermischer in gerichtete mechanische Energie kann mit einer isentropen Zustandsänderung erfolgen. Die Wirkprinzipien an einer Kolben- und einer Strömungsmaschine sind dabei jedoch unterschiedlich. Die auf einen Kolben wirkende Kraft ergibt sich aus dem mittleren Impuls der Moleküle und der Anzahl der Impulse (Druck). Die Moleküle treffen dabei mit einer mittleren Geschwindigkeit auf den Kolben, die etwa der Schallgeschwindigkeit entspricht. Der mittlere Impuls ergibt sich damit aus Molekülmasse und Schallgeschwindigkeit (*p̅* = *m* * *vₛ*)*.* Bewegt sich der Kolben bei einer Expansion, sinkt die relative Geschwindigkeit unter die Schallgeschwindigkeit. Damit liegt der mittlere wirksame Impuls immer etwas unter dem Impuls bei Schallgeschwindigkeit. Bei einer Kompression liegt er dagegen etwas über dem Impuls bei Schallgeschwindigkeit, da der Kolben sich entgegengesetzt bewegt.

Aus dem Stand der Technik sind Strömungsmaschinen bekannt. Bei diesen wird ein kompressibles Arbeitsmedium zunächst mit einem Konfusor (Düse) beschleunigt. Im Gegensatz zu vielen anderen Energieformen besitzt thermische Energie keinen Wirkrichtungsvektor im Raum. Sie wirkt in alle Raumrichtungen gleichzeitig. Der Konfusor wandelt diese ungerichtete translatorische Energie in gerichtete laterale Energie der Strömung um. Dadurch kann die Strömung aber nur bis zur Schallgeschwindigkeit beschleunigt werden, da ab dieser Geschwindigkeit keine translatorische Energie für die Umwandlung zur Verfügung steht. Eine Lösung zur Beschleunigung über die Schallgeschwindigkeit hinaus bietet eine Laval Düse. Hier wird nach dem Erreichen der Schallgeschwindigkeit der Strömungsquerschnitt wieder vergrößert. Die dabei freigesetzte Volumenarbeit ermöglicht eine weitere laterale Beschleunigung. Ein Nachteil ist die Verringerung der Entropie durch die Querschnittserweiterung der Laval Düse. Eine Alternative beschreibt DE 10 2014 004 237 A1. Dabei wird ein Gemisch aus Gas und einer Flüssigkeit gemischt und beschleunigt. Durch die Zuführung von Rotations- und Vibrationsenergie aus der Flüssigkeit, kann die Mehrphasenströmung über ihre Schallgeschwindigkeit hinaus ohne Querschnittserweiterung beschleunigt werden. Die höhere Geschwindigkeit ermöglicht wegen der Energiegleichung *E* = *m*/2 * *v*² eine höhere abgegebene Energiemenge und damit einen höheren Wirkungsgrad im Vergleich zu einer Kolbenmaschine. Ein ähnliches Verfahren wird in DE 10 2012 108 222 A1 beschrieben. Auch hier wird eine Mehrphasenströmung (Luft/Wasser) beschleunigt und auf eine Überschallgeschwindigkeit beschleunigt. Der Wasseranteil erhöht hier die Masse der Strömung und kompensiert die Verringerung der translatorischen Energie durch Zufuhr von Rotations- und Vibrationsenergie der Wassermoleküle.

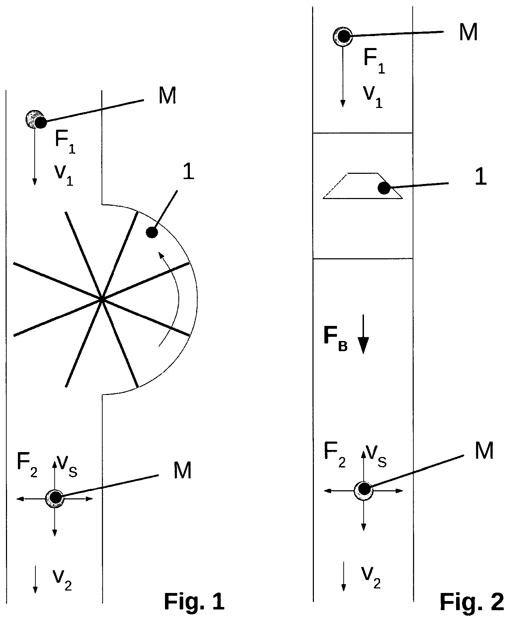

Ein wenig betrachtetes Problem bei Strömungsmaschinen ist die Beschleunigung der Moleküle nach der Strömungsmaschine. Hierzu wird auf die Fig. 1 verwiesen. Die Moleküle bewegen sich mit der Geschwindigkeit v₁ im Strömungskanal (siehe Fig. 1). Treffen sie auf die Strömungsmaschine (4) geben sie einen Großteil ihrer lateralen kinetischen Energie an die Strömungsmaschine ab und bewegen sich mit der Geschwindigkeit v₂ weiter. Da die Geschwindigkeit v₂ durch die Energieabgabe sehr gering ist, dominiert bei der Molekülbewegung die Schallgeschwindigkeit (v_{S}). Damit wirkt auch eine Kraft F₂ entgegen der Strömungsrichtung. Diese Kraft wird durch die Intensität und Anzahl der Molekülimpulse entgegen der Strömungsrichtung beeinflusst und begrenzt den Wirkungsgrad der Strömungsmaschine.

Um die Kraft zu reduzieren und den Wirkungsgrad zu erhöhen wird in der Technik thermische Energie an ein externes Reservoir abgeführt. Dadurch sinkt die Temperatur und damit die Intensität der Molekülimpulse. Um die Intensität signifikant zu verringern muss jedoch sehr viel thermische Energie und Entropie abgeführt werden. Beim Clausius-Rankine oder Organic-Rankine Verfahren wird die translatorische Geschwindigkeit durch Kondensation auf Null reduziert. Dabei muss aber die komplette translatorische Energie und bei mehratomigen Molekülen auch ein Teil der Vibrations- und Rotationsenergie abgeführt werden.

In DE 26 54 097 A1 wird der Betrieb eines rechts laufenden Kreisprozesses unterhalb der Umgebungstemperatur beschrieben. Damit besteht aber das Problem der Abführung der thermischen Energie an die Umgebung. Zur Lösung schlägt der Autor eine Wärmepumpe vor. Er erklärt aber nicht, warum diese Wärmepumpe eine geringere Antriebsenergie benötigen soll, als durch die höhere Temperaturdifferenz beim rechts laufenden Prozess zusätzlich freigesetzt wird. Durch thermische und Reibungsverluste an der Wärmepumpe muss zusätzliche thermische Energie abgeführt werden, was nach dem Energieerhaltungssatz die Nutzenergie des Gesamtsystems verringert.

In DE 10 2017 127 716 A1 wird ein Verfahren zur Kühlung durch isotherme Kompression beschrieben. Das Verfahren nutzt die Gravitationskraft zur isothermen Kompression. Die Strömungsmaschine befindet sich aber nicht im Strömungskanal der Mehrphasenströmung und Ziel des Verfahrens ist die Kompression vor der Strömungsmaschine. Wegen des geringen Entropiestromes an der Strömungsmaschine im Verhältnis zur Mehrphasenströmung ist das Verfahren nicht zur Erzeugung mechanischer Energie vorgesehen, sondern zur Kühlung.

In der DE 195 33 249 C1 ist eine Strömungsmaschine zur Erzeugung mechanischer Arbeit aus Wärmeenergie beschrieben. Diese weist in einem Arbeitsraum einen mit einer Wärmequelle verbundenen ersten Abschnitt als Verdampfungsabschnitt zum Verdampfen eines flüssigen Arbeitsstoffes und einen mit einer Wärmesenke verbundenen zweiten Abschnitt als Kondensationsabschnitt zum Kondensieren des verdampften Arbeitsstoffes auf. In einer den Verdampfungsabschnitt und den Kondensationsabschnitt miteinander verbindenden Umwandlungsvorrichtung wird die kinetische Energie des von dem Verdampfungsabschnitt zum Kondensationsabschnitt aufgrund eines hohen Druckgradienten mit hoher Geschwindigkeit strömenden dampfförmigen Arbeitsstoffes in mechanische Arbeit umgewandelt. Eine Rückführungsvorrichtung dient zum Rückführen des kondensierten Arbeitsstoffes von dem Kondensationsabschnitt in den Verdampfungsabschnitt.

Aus der US 4 485 629 A geht ein Verfahren zur Speicherung mechanischer oder thermischer Energie in chemischer Form und zur Rückgewinnung der gespeicherten Energie in mechanischer Form hervor. Die Vorrichtung umfasst Kammern zur Aufnahme einer nicht idealen Lösung aus einem Dampf und einer Flüssigkeit und Kammern zur Aufnahme von verflüssigten Dämpfen, die von der nicht idealen Lösung getrennt sind, wobei diese Kammern in engem thermischen Kontakt stehen und deren Volumina durch Leitungen mit einem Motor zur Rückgewinnung der gespeicherten Energie während der Rückgewinnungsphase verbunden sind.

Die US 2019/128148 A1 offenbart ein Verfahren und ein System zur effizienten Nutzung thermischer Energie zur Bereitstellung kinetischer Energie und/oder elektrischer Energie. Das Verfahren verwendet mindestens zwei Wärmetauscher zur Erwärmung des Arbeitsmediums, eine Wärmekraftmaschine und einen Kondensator. Das Arbeitsmedium besteht aus mindestens zwei Substanzen. Das Arbeitsmedium wird auf der Primärseite des ersten Wärmetauschers teilweise kondensiert, wobei Wärme an das auf der Sekundärseite strömende Arbeitsmedium übertragen wird und anschließend weitere Kondensationswärme an einen Kühlkreislauf in einem Kondensationswärmetauscher auf der Primärseite des Kondensationswärmetauschers abgegeben wird. Anschließend wird das Arbeitsmedium auf die Sekundärseite des ersten Wärmetauschers umgeleitet. Im primärseitigen Kondensationswärmetauscher findet eine Abtrennung von gasförmigen Anteilen des Arbeitsmediums statt.

Mit der AT 506 353 A1 wird eine Strahlverdichterwärmekraftmaschine beschrieben, bei der ein Strahlverdichter in einem Wärmekraftmaschinenkreislauf angeordnet ist, mit Hilfe dessen Treibstrahles ein aus einer Expansionsmaschine austretendes Medium angesaugt und verdichtet werden kann und in einem Sammelgefäß gesammelt wird, von welchem eine Leitung zu einer Pumpe führt und eine weitere Leitung zum Strahlverdichter führen kann. Die US 3 972 195 A betrifft eine Zweiphasen-Energiequelle mit einem Rotor, einer Düse mit einem Auslass, der so gerichtet ist, dass er einen Zweiphasen-Strahl abgibt, der auf den Rotor auftrifft, um diesen zu drehen, wobei die Düse eine Einrichtung aufweist, um die Strömung darin zu unterteilen und einer Einrichtung zum Zuführen eines erhitzten ersten Fluids in flüssigem Zustand zu der Düse für eine unterteilte Strömung darin in Richtung des Auslasses und zum Zuführen eines zweiten und verdampfbaren Fluids in flüssigem Zustand zu der Düse, um Wärme von dem ersten Fluid darin aufzunehmen, was bewirkt, dass das zweite Fluid in der Düse verdampft und sich mit dem ersten Fluid in im Wesentlichen flüssigem Zustand mischt, um den abgehenden Strahl zu erzeugen.

Aufgabe der Erfindung ist es, den Wirkungsgrad an einer Strömungsmaschine zu erhöhen. Diese Aufgabe wird erfindungsgemäß mit einem Verfahren mit den Merkmalen des Anspruchs 1 gelöst. Vorteilhafte Ausgestaltungen des Verfahrens sind in den Ansprüchen 2 bis 5 aufgezeigt.

Das erfindungsgemäße Verfahren sieht vor, dass eine Strömung eines kompressiblen Fluids einer Strömungsmaschine zugeführt wird. An der Strömungsmaschine wird kinetische Energie des Fluids auf die Strömungsmaschine übertragen. Nach einer polytropen Expansion an der Strömungsmaschine wird die an der Strömungsmaschine bei der Übertragung der kinetischen Energie verringerte Strömungsgeschwindigkeit des Fluids nach der Strömungsmaschine durch eine mit einem Kraftfeld erzeugte und in Strömungsrichtung wirkende Kraft F_{B} durch Umwandlung potentieller Energie des Fluids in kinetische Energie des Fluids soweit erhöht wird, dass damit der an der Strömungsmaschine verringerte Druck des Fluids wieder auf mindestens das 0,1-fache des Drucks des Fluids vor der Strömungsmaschine erhöht wird. Technisch ist die Erhöhung des Druckes des Fluids nach der Strömungsmaschine natürlich auf den Druck des Fluids vor der Strömungsmaschine begrenzt. Die Kraft F_{B} in Strömungsrichtung wird durch ein Kraftfeld erzeugt, wie z.B. ein Gravitationsfeld, ein Zentrifugalfeld, ein Magnetfeld oder ein elektrisches Feld. Durch die Lageänderung der Moleküle entlang der Strömungsrichtung wird potentielle Energie des Feldes in kinetische Bewegungsenergie umgewandelt.

Bei dem Verfahren gemäß Anspruch 1 wirkt die in Strömungsrichtung gerichtete Kraft F_{B}, die eine entgegen der Strömungsrichtung wirkende thermodynamische Kraft F₂ teilweise oder vollständig kompensiert. Die Erhöhung der Strömungsgeschwindigkeit des Fluids nach der Strömungsmaschine mit der Kraft F_{B} bewirkt eine Erhöhung des Drucks des Fluids im weiteren Strömungsverlauf nach der Strömungsmaschine. Die daraus resultierende Senkung des Druckes im Fluid direkt nach der Strömungsmaschine erhöht den Wirkungsgrad der polytropen Expansion an der Strömungsmaschine. Die Moleküle des Fluids werden durch die Kraft F_{B} auf eine Geschwindigkeit v₂ beschleunigt. Handelt es sich bei dem Fluid beispielsweise um ein Gas, sollte die Geschwindigkeit v² mindestens das 0,3-fache der Schallgeschwindigkeit des Fluids betragen. F_{B} liegt damit in der Größenordnung von F₂. Bei einem Gemisch aus zwei Gasen sollte die Geschwindigkeit v₂ mindestens das 0,3-fache des gewichteten Mittelwerts der Schallgeschwindigkeiten der beiden Gase betragen. Die Beschleunigung der Moleküle des Fluids nach der Strömungsmaschine hat großen Einfluss auf deren Wirkungsgrad. Ziel der Beschleunigung ist die Senkung des Druckes und damit der Kraft entgegen der Strömungsrichtung direkt nach der Strömungsmaschine. Je höher die Beschleunigung nach der Strömungsmaschine, umso größer ist der Einfluss des erfindungsgemäßen Verfahrens auf den Wirkungsgrad der Strömungsmaschine, wobei natürlich die Erhöhung der Strömungsgeschwindigkeit nach der Strömungsmaschine auf die Strömungsgeschwindigkeit vor der Strömungsmaschine begrenzt ist. Gegenüber einer Strömungsgeschwindigkeit von 0,3-facher Schallgeschwindigkeit des Fluids werden für den Wirkungsgrad der Strömungsmaschine höhere Wirkungsgrade erreicht, wenn die Strömungsgeschwindigkeit nach der Strömungsmaschine beispielsweise auf 0,5-fache oder 0,6-fache oder 0,8-fache oder einfache Schallgeschwindigkeit des Fluids beschleunigt wird, wobei die Strömungsgeschwindigkeit vor der Strömungsmaschine dann bei zumindest etwa 0,51-facher bzw. 0,61-facher bzw. 0,81-facher bzw. 1,01-facher Schallgeschwindigkeit des Fluids liegt.

Wird das Fluid hingegen aus einem Gas und einer Flüssigkeit gebildet, so sollte die Geschwindigkeit v₂ so hoch sein, dass die translatorische Geschwindigkeit der Moleküle des Gases (kompressibler Fluidanteil) mindestens das 0,3-fache der Schallgeschwindigkeit des Gases beträgt.

In den Verfahren des Standes der Technik wird eine Beschleunigung der Strömung durch Abführung von thermischer Energie und Entropie an die Umwelt erreicht. Beim erfindungsgemäßen Verfahren soll die zum Beschleunigen notwendige Abführung thermischer Energie gänzlich entfallen oder aber zumindest deutlich reduziert werden, indem die Beschleunigung der Moleküle des Fluids mit der durch ein Kraftfeld in Strömungsrichtung wirkenden Kraft F_{B} erzeugt wird. Die Kraft F_{B} ist unabhängig vom Bewegungszustand des Moleküls und kann so selbst Moleküle mit hoher kinetischer Energie beschleunigen. Eine höhere kinetische Bewegungsenergie und der damit verbundene höhere kinetische Impuls der Moleküle ermöglicht die Abführung von thermischer Energie auf ein externes Reservoir (Energiesenke) mit höherer Intensität (Temperatur) nach der Beschleunigung.

Erfindungsgemäß wird das kompressible Fluid in Strömungsrichtung vor der Strömungsmaschine mit einer Düse (Konfusor) beschleunigt. In Strömungsrichtung nach der Strömungsmaschine sind ein Diffusor nachgelagert.

Das kompressible Fluid wird damit zunächst am Konfusor beschleunigt, wobei translatorische Bewegungsenergie der Moleküle (Eₜᵣₐₙₛ) in laterale Bewegungsenergie (Eₗₐₜ) und Vibrations- und Rotationsenergie (E_{vib}, Eᵣₒₜ) der Moleküle des Fluids in translatorische Energie (Eₜᵣₐₙₛ) umgewandelt werden, wobei die Fluidströmung auf eine Geschwindigkeit (v₁) beschleunigt wird. Damit steigt auch der translatorische Entropieanteil (Sₜᵣₐₙₛ). An der Strömungsmaschine werden Energie und Impuls abgegeben, sodass dabei die Geschwindigkeit der Fluidströmung wieder deutlich verringert wird. Durch die Kraft F_{B} im Strömungskanal werden dann die Moleküle des Fluids nach der Strömungsmaschine auf die Geschwindigkeit v₂ beschleunigt. Im Diffusor und/oder im Verdichter sinkt dann der volumenwirksame Energie- und Entropieanteil (Eₜᵣₐₙₛ, Sₜᵣₐₙₛ) durch Umwandlung in Vibrations- und Rotationsenergie. Dieser Anteil muss nicht extern abgeführt werden. Eine vollständige Kompensation von F₂ würde die Beschleunigung der Moleküle auf Schallgeschwindigkeit erfordern. Eine signifikante Erhöhung des Wirkungsgrades der Strömungsmaschine wird für eine Geschwindigkeit v₂ ab 0,3-facher Schallgeschwindigkeit des Fluids erreicht. Bei Beschleunigung auf einfache Schallgeschwindigkeit entsteht ein Vakuum direkt hinter der Strömungsmaschine. Im Diffusor wird ein Teil der lateralen kinetischen Energie wieder in eine ungerichtete thermodynamische Bewegung umgewandelt, wobei die Temperatur und der Druck ansteigen. Damit muss weniger oder keine thermische Energie an die Umwelt abgeführt werden, was die globale Erwärmung durch thermodynamische Prozesse verringert. Die Strömung bewegt sich dann mit einer geringen lateralen Geschwindigkeit (v₃) weiter.

Die laterale Geschwindigkeit (v₁) der Moleküle vor der Strömungsmaschine sollte über der Schallgeschwindigkeit liegen. Bei einer höheren Geschwindigkeit wird wegen *E* = *m*/2 * *v*² mehr Energie abgegeben, als bei der Beschleunigung der Moleküle mit F_{B} auf Schallgeschwindigkeit benötigt wird. Grundsätzlich basiert die Beschleunigung über Schallgeschwindigkeit auf dem Relativitätsprinzip. Im Konfusor wird die translatorische Bewegung der Moleküle in eine laterale Bewegung in Strömungsrichtung umgewandelt. Die mittlere Geschwindigkeit gegenüber einem Betrachter außerhalb der Strömung bleibt jedoch konstant. Damit kann trotz der gesunkenen Temperatur keine zusätzliche Energie von außen zugeführt werden. Bezüglich der in der Strömung mitgeführten Vibrations- und Rotationsenergie sinkt aber die Intensität der translatorischen Bewegung der Moleküle. Damit erfolgt eine Energieübertragung von der Vibrations- und Rotationsenergie auf die translatorische Energie, die damit zusätzlich zur lateralen Beschleunigung genutzt werden kann. Die laterale Geschwindigkeit kann damit höher sein, als die mittlere translatorische Geschwindigkeit (Schallgeschwindigkeit) am Eingang des Konfusors. So kann Energie mit geringerer Intensität (Impuls, Temperatur) zugeführt werden. Das erhöht den Wirkungsgrad und die Energieeffizienz des Prozesses.

Bei einer negativen Beschleunigung im Diffusor wirkt der Energiefluss in die entgegengesetzte Richtung. Die laterale Bewegungsenergie wird in eine ungeordnete translatorische Bewegung der Moleküle umgewandelt und erhöht deren Intensität. Damit kann ein Teil der translatorischen Energie in Vibrations- und Rotationsenergie umgewandelt werden. Wird thermische Energie an die Umgebung abgeführt, muss auch die Vibrations- und Rotationsenergie mit abgeführt werden. Wird die Strömung jedoch zuvor durch die externe Kraft F_{B} zusätzlich beschleunigt, erhöht sich der Anteil an volumenunabhängiger Vibrations- und Rotationsenergie. Es kann daher mehr Energie in der Strömung gespeichert und bei einer erneuten Beschleunigung wieder freigesetzt werden.

Das Verhältnis von Vibrations- und Rotationsenergie zur Translationsenergie wird durch den Isentropenkoeffizienten beschrieben. Daher sollte das Fluid im Arbeitstemperaturbereich zumindest einen Fluidanteil mit einem Isentropenkoeffizienten von kleinergleich 1,4 aufweisen. Ein höherer Wirkungsgrad wird mit einem Fluid erreicht, dessen zumindest einer Fluidanteil einen Isentropenkoeffizienten von kleinergleich 1,2 aufweist. Noch höher ist der Wirkungsgrad bei einen Isentropenkoeffizienten von kleinergleich 1,1.

Das Fluid kann ein Gas oder eine Mehrphasenströmung sein, wobei im Sinne der Anmeldung als Mehrphasenströmung sowohl Gasgemische, als auch Mischungen aus Gas und Flüssigkeiten verstanden werden. Bei einer Mehrphasenströmung sollten Stoffe mit hohem Isentropenkoeffizienten (cₚ/c_{V}) mit Stoffen mit niedrigem Isentropenkoeffizienten gemischt werden (z.B. Helium/n-Butan). Der nicht volumenabhängige Anteil der thermischen Energie (Vibrations- und Rotationsenergie) sollte eine hohe Wärmekapazität im Verhältnis zur translatorischen Energie besitzen. Auch bei Flüssigkeiten ist prinzipiell die Berechnung eines Isentropenkoeffizienten (cₚ/c_{V}) möglich. Dieser beträgt etwa 1. Der Vorteil von Gasgemischen ist der bessere Energieaustausch durch die größere Wirkungsfläche der einzelnen Moleküle. Bei reinen Stoffen (Fluid aus einem Gas) ist der Anteil an Vibrations- und Rotationsenergie durch die Molekülstruktur festgelegt. Es sollten daher Gase mit sehr geringem Isentropenkoeffizienten und hoher Molekülmasse eingesetzt werden. Auch eine Mehrphasenströmung aus einem gasförmigen und einem flüssigen Fluidanteil kann eingesetzt werden, wobei zur Erzeugung der Druckverringerung nach der Strömungsmaschine die Geschwindigkeit v₂ so hoch sein sollte, dass die translatorische Geschwindigkeit der Moleküle des Gases (kompressibler Fluidanteil) mindestens das 0,3-fache der Schallgeschwindigkeit des Gases beträgt.

Bei einer Weiterbildung des Verfahrens wird als Arbeitsmedium eine Fluidmischung verwendet. Dabei wird ein Fluid mit hohem Dampfdruck und ein Fluid mit niedrigem Dampfdruck kombiniert. Der Druck am Eingang des Konfusors wird so gewählt, dass beide Fluide flüssig sind (Vibrations- und Rotationsenergie). Sinkt bei der Beschleunigung im Konfusor der Druck, erreicht das Fluid mit dem höheren Dampfdruck den Siedepunkt. Durch die Übertragung von Vibrations- und Rotationsenergie aus dem Fluid mit dem niedrigen Dampfdruck wird das Fluid mit dem hohen Dampfdruck vollständig verdampft. Der beschriebene physikalische Effekt der Verdampfung ist auch Grundlage der Kavitation, die an Strömungsmaschinen meist vermieden werden soll. Beim erfindungsgemäßen Verfahren wird dieser Effekt jedoch bewusst verstärkt um eine hohe Beschleunigung der Strömung zu erreichen. Das jetzt kompressible Fluid (mit translatorischer Energie) wird im Strömungskanal durch die Volumenzunahme stark beschleunigt und gibt Energie und einen Impuls an die Strömungsmaschine ab. Durch die Druckerhöhung im Diffusor und/oder im Verdichter wird der Kondensationspunkt erreicht und der kompressible Anteil des Fluides gibt seine translatorische Energie an den inkompressiblen Fluidanteil (Vibrations- und Rotationsenergie) ab.

In einer alternativen Weiterbildung kann auch mit einem reversiblen chemischen Prozess gearbeitet werden. Dabei wird ein in einer Flüssigkeit gelöstes Gas dem Konfusor zugeführt. Sinkt bei der Beschleunigung im Konfusor der Druck verändert sich das Reaktionsgleichgewicht und es tritt Gas aus der Lösung aus. Damit steht translatorische Energie für eine hohe Beschleunigung zur Verfügung. Das kompressible Fluid gibt Energie und einen Impuls an die Strömungsmaschine ab. Durch die Druckerhöhung im Diffusor und/oder im Verdichter ändert sich das Reaktionsgleichgewicht erneut und das Gas löst sich durch die chemische Reaktion in der Flüssigkeit. Es wird translatorische Energie in Vibrations- und Rotationsenergie umgewandelt.

Die extern zugeführte Energie für F_{B} kann z.B. durch eine Gravitationskraft, eine Magnetkraft, eine elektrische Kraft oder eine Zentrifugalkraft zugeführt werden. Ebenso kann auch eine mechanische Kraft durch eine mit von außen zugeführter Energie betriebene weitere Strömungsmaschine bereitgestellt werden, wobei diese Strömungsmaschine dann in Strömungsrichtung dem Diffusor nachgeordnet ist.

Tabelle 1 zeigt einen Vergleich der Beschleunigungszeiten und -wege durch die Gravitationskraft auf der Erde (~9,81 m/s²) im freien Fall von Null auf Schallgeschwindigkeit (vₛ) für verschiedene Stoffe bei Normaldruck und Normaltemperatur (1bar; 300K).

**Tabelle 1**

| **Stoff** | **vₛ (m/s)** | **t (s)** | **s (m)** |
|---|---|---|---|
| Helium | 1020 | 104 | 53028 |
| Stickstoff | 353 | 36 | 6351 |
| Kohlendioxid | 269 | 27 | 3688 |
| Xenon | 174 | 18 | 1543 |
| Wasser/Luft Gemisch | 10 | 1 | 10 |

Aus der Tabelle geht hervor, dass die Gravitationskraft besonders für Medien mit sehr schweren Molekülen und für Mehrphasenströmungen geeignet ist. Da sich durch die Beschleunigung ab dem 0,3-fachen der Schallgeschwindigkeit des Fluids im Diffusor der Druck und die Temperatur erhöhen, kann der Prozess auch unterhalb der Umgebungstemperatur betrieben werden. Bei tieferen Temperaturen sind wegen der geringeren Schallgeschwindigkeit auch kürzere Beschleunigungswege und Beschleunigungszeiten möglich. Bei einem Gemisch aus Wasser und Luft mit hohem Masseanteil an Wasser erhöht sich der Wasserdruck bei einer Fallhöhe von 10 m von 0 bar auf 1 bar. Damit werden auch die Luftmoleküle auf diesen Druck komprimiert und bewegen sich damit mit Schallgeschwindigkeit der Luft. Die Gesamtströmung besitzt dagegen eine wesentlich geringere Schallgeschwindigkeit. Eine Fallhöhe von 10 m ist damit bereits für die Erzeugung eines Vakuums hinter der Arbeitsmaschine ausreichend. In einem Gravitationsdiffusor kann daher die Geschwindigkeit der Moleküle im oder vor dem Diffusor erhöht werden. Dies reduziert den unteren Druck bei der isentropen Expansion und erhöht den Wirkungsgrad des thermodynamischen Prozesses.

Höhere Kräfte als bei der Gravitation können mit einer Zentrifugalkraft erzeugt werden. Damit verkürzen sich die Beschleunigungswege und damit die Dimensionen der thermodynamischen Maschine. Dazu wird die thermodynamische Maschine rotationssymmetrisch aufgebaut und dreht sich um ihre Rotationsachse. Durch die Rotation entsteht ein inhomogener Phasenraum. Der Erwartungswert (Scharmittelwert) steigt mit dem Abstand zur Rotationsachse und damit auch der Druck, die Temperatur und die Dichte. Liegt die tangentiale Geschwindigkeit im Bereich der Schallgeschwindigkeit, bildet sich an der Rotationsachse nahezu ein Vakuum. Der Verdichter dient zur Kompensation der Prozessverluste (z.B. Reibung) und muss keine hohe Volumenarbeit verrichten. Er drückt das Arbeitsmedium in den Konfusor wo es beschleunigt wird. Eine zusätzliche Beschleunigung erfolgt durch die thermodynamische Kraft bei in Strömungsrichtung abnehmender Zertrifugalkraft F_{Z}. An der Strömungsmaschine wird den Molekülen bei hoher Geschwindigkeit kinetische Energie entzogen. Danach werden die Moleküle im Strömungskanal in Strömungsrichtung durch F_{Z} beschleunigt. Im Diffusor erhöht sich der Druck und die Temperatur. Vor dem Verdichter kann optional mit einem Wärmetauscher thermische Energie (Q₂) abgeführt werden. Nach dem Verdichter wird thermische Energie (Q₁) zugeführt. Damit verringert sich die Volumenarbeit am Verdichter. Der Transport der thermischen Energie ist über die Wand des Strömungskanals durch Wärmeleitung aber auch durch ein Fluid in einem parallelen Strömungskanal möglich.

Eine thermodynamische Maschine mit Zentrifugalkonfusor und Zentrifugaldiffusor ermöglicht es durch die Änderung der Zentrifugalkraft die Moleküle über deren Schallgeschwindigkeit hinaus lateral zu beschleunigen. Es können homogene Stoffe aber auch Mehrphasenströmungen eingesetzt werden. Bei der Verwendung von Mehrphasenströmungen mit unterschiedlichen Isentropenkoeffizienten wird die Temperaturänderung verringert und durch einen höheren inkompressiblen Anteil (Rotations- und Vibrationsenergie) kann die tangentiale Geschwindigkeit und damit der Radius verringert werden. Der translatorische Anteil des Entropiestroms steigt bei der Beschleunigung und führt damit auch zu einer höheren lateralen Geschwindigkeit an der Strömungsmaschine.

Je nach Anwendungsfall kann die Strömungsmaschine eine Turbine oder ein MHD-Generator sein.

Grundsätzlich ist das erfindungsgemäße Verfahren aber zur Erhöhung des Wirkungsgrades beliebiger polytroper Expansionen geeignet. Bei einer Expansion an einer Kolbenmaschine wir die Energie bei Schallgeschwindigkeit entnommen und die Beschleunigungsenergie im Strömungskanal bei Relativgeschwindigkeiten unter der Schallgeschwindigkeit zugeführt. Bei Strömungsmaschinen ist aber wegen der höheren erreichbaren Relativgeschwindigkeit bei der Abgabe von mechanischer Energie ein größerer Effekt zu erwarten. Bei Kolbenmaschinen müssen außerdem wegen der diskontinuierlichen Arbeitsweise mehrere Kolben parallel und phasenverschoben betrieben werden, damit im Strömungskanal eine kontinuierliche Strömung entsteht.

Nachfolgend werden Ausführungsbeispiele der Erfindung anhand der Zeichnungen erläutert. Es zeigen:
- Fig. 1: eine Strömung eines Fluides mit einer Strömungsmaschine gemäß Stand der Technik
- Fig. 2: eine Anordnung zur Nutzung des erfindungsgemäßen Verfahrens
- Fig. 3: eine weitere Anordnung zur Nutzung des erfindungsgemäßen Verfahrens
- Fig. 4: einen thermodynamischen Kreisprozess mit einem Zentrifugalkonfusor und einem Zentrifugaldiffusor
- Fig. 5: einen Gravitationsdiffusor
- Fig. 6: einen thermodynamischen Kreisprozess mit MHD Generator

Fig. 1 zeigt eine Strömung eines Fluids mit einer Strömungsmaschine 1 gemäß Stand der Technik. Die Strömungsmaschine 1 ist als Flügelrad dargestellt. Der Fluidstrom überträgt einen Teil seiner kinetischen Energie an die Strömungsmaschine 1, wo sie als Arbeit abgeführt wird. Die Moleküle M des Fluids bewegen sich mit der Geschwindigkeit v₁ im Strömungskanal und geben an den Flügelrädern der Strömungsmaschine einen Teil ihrer lateralen kinetischen Energie an die Strömungsmaschine ab und bewegen sich danach mit der Geschwindigkeit v₂ weiter.

In der Fig. 2 ist eine Anordnung zur Nutzung des erfindungsgemäßen Verfahrens zur Erhöhung eines Entropiestromes an einer Strömungsmaschine 1 dargestellt. Hierzu wird ein kompressibles Fluid an der als Turbine ausgestalteten Strömungsmaschine 1 polytrop expandiert. Nach der polytropen Expansion wirkt in Strömungsrichtung eine zusätzliche Kraft F_{B} auf die Moleküle M des Fluids, sodass die Moleküle M in Strömungsrichtung durch diese Kraft beschleunigt werden. Die in Strömungsrichtung wirkende Kraft F_{B} wird durch ein Kraftfeld erzeugt, wobei potentielle Energie des Fluids in kinetische Energie des Fluids umgewandelt wird. Durch diese Kraft F_{B} werden die Moleküle M eines aus Gas oder aus einem Gasgemisch bestehenden Fluids nach der Strömungsmaschine auf mindestens 0,3-fache Schallgeschwindigkeit des Fluids beschleunigt, sodass damit der an der Strömungsmaschine verringerte Druck des Fluids wieder auf mindestens das 0,1-fache des Drucks des Fluids vor der Strömungsmaschine erhöht wird und somit die zur Wirkungsgradsteigerung der Strömungsmaschine notwendige Druckverringerung direkt nach der Strömungsmaschine erreicht wird. In der dargestellten Ausführung kann die Kraft F_{B} beispielsweise die Gravitationskraft sein. Bei einem Fluid, welches aus einem Gemisch aus Gas und Flüssigkeit gebildet ist, wird die Druckverringerung direkt nach der Strömungsmaschine erreicht, wenn die Geschwindigkeit v₂ des Fluids zumindest so hoch ist, dass die translatorische Geschwindigkeit der Moleküle M des Gases (kompressibler Fluidanteil) mindestens das 0,3-fache der Schallgeschwindigkeit des Gases beträgt.

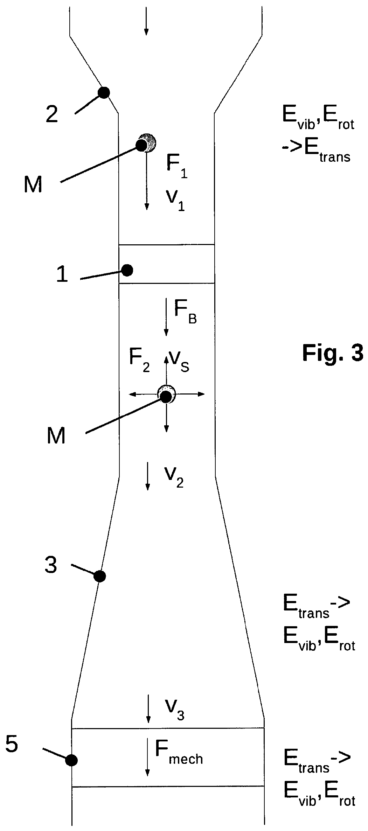

**Fig. 3** zeigt eine weitere Anordnung zur Nutzung des erfindungsgemäßen Verfahrens. Der polytropen Expansion an der Strömungsmaschine 1 ist ein Konfusor 2 vorgelagert, sodass das kompressible Fluid vor der Strömungsmaschine 1 beschleunigt wird. Der Strömungsmaschine 1 ist in Strömungsrichtung ein Diffusor 3 nachgelagert. Je nach gewünschter Wirkungsgradsteigerung für die Strömungsmaschine kann die Beschleunigung am Konfusor vor der Strömungsmaschine beispielsweise bis auf 0,31-fache oder 0,51-fache oder 0,61-fache oder 0,81-fache oder 1,01-fache Schallgeschwindigkeit des Fluids erfolgen. Nach der Strömungsmaschine wird das Fluid dann wieder möglichst nah an den vor der Strömungsmaschine liegenden Wert der Strömungsgeschwindigkeit beschleunigt (0,3-fache bzw. 0,5-fache bzw. 0,6-fache bzw. 0,8-fache bzw. einfache Schallgeschwindigkeit des Fluids). Dem Diffusor 3 ist ein Verdichter 5 nachgeschaltet, wobei dieser hier allerdings optional ist. In einer weiteren nicht dargestellten Ausgestaltung ist der Verdichter 5 anstelle des Diffusors 3 vorgesehen. Das Fluid kann als Reinstoff (ein Gas), Gasgemisch oder als Mischung aus Gas und Flüssigkeit vorliegen und die Kraft F_{B} beispielsweise die Gravitationskraft sein.

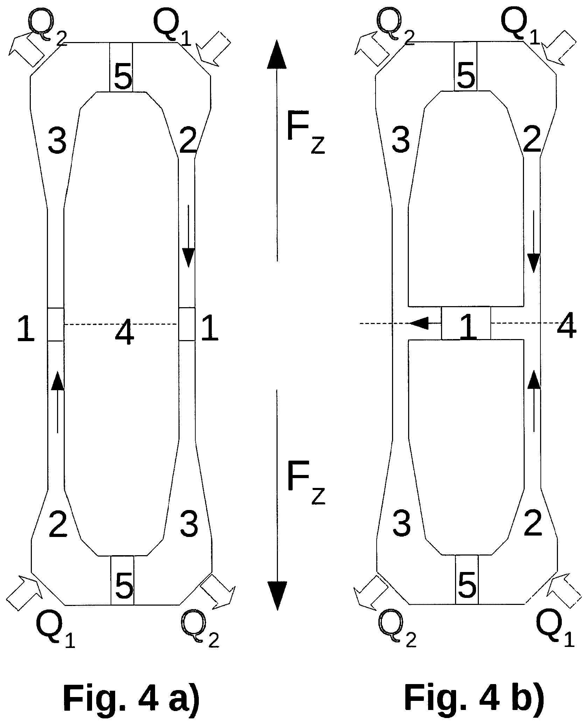

**Fig. 4a** und **Fig. 4b** zeigen zwei Anordnungen zur Nutzung des erfindungsgemäßen Verfahrens in einem thermodynamischen Kreisprozess mit einem Zentrifugalkonfusor und einem Zentrifugaldiffusor. Ein Strömungskanal mit einem Fluid wird in Rotation um eine Rotationsachse 4 versetzt. Dadurch wirkt eine Zentrifugalkraft F_{Z} auf das Fluid und bewirkt, dass die Dichte des Fluids mit dem Abstand von der Rotationsachse 4 steigt. Am Ort mit der höchsten Rotationsgeschwindigkeit wird ein Verdichter 5 angebracht. An der Rotationsachse 4 wird die Strömungsmaschine 1 angeordnet. Das Fluid wird zunächst im Konfusor 2 beschleunigt und gibt Energie und Impuls an der Strömungsmaschine 1 ab. Nach der Strömungsmaschine 1 wird das Fluid durch die steigende Zentrifugalkraft beschleunigt und der Druck im Diffusor 3 wieder erhöht. Auch hier werden die Moleküle M des Fluids auf mindestens 0,3-fache Schallgeschwindigkeit des Fluids beschleunigt. Zwischen Verdichter 5 und Konfusor 2 kann eine thermische Energie Q₁ zugeführt werden. Optional wird zwischen Diffusor 3 und Verdichter 2 eine thermische Energie Q₂ abgeführt. In der Ausführung gemäß **Fig. 4a** ist die Strömungsmaschine 1 radial zur Rotationsachse angeordnet. In **Fig. 4b** ist die Strömungsmaschine 1 in einer alternativen Ausführung axial zur Rotationsachse angeordnet. Auch hier kann das Fluid als Reinstoff (ein Gas), Gasgemisch oder als Mischung aus Gas und Flüssigkeit vorliegen. Bei einem aus Gas oder aus einem Gasgemisch bestehenden Fluid wird auch hier das Fluid nach der Strömungsmaschine auf mindestens 0,3-fache Schallgeschwindigkeit des Fluids beschleunigt, sodass damit der an der Strömungsmaschine verringerte Druck des Fluids wieder auf mindestens das 0,1-fache des Drucks des Fluids vor der Strömungsmaschine erhöht wird und somit die zur Wirkungsgradsteigerung der Strömungsmaschine notwendige Druckverringerung direkt nach der Strömungsmaschine erreicht wird. Bei einem Fluid, welches aus einem Gemisch aus Gas und Flüssigkeit gebildet ist, wird die Druckverringerung direkt nach der Strömungsmaschine erreicht, wenn die Geschwindigkeit v₂ des Fluids zumindest so hoch ist, dass die translatorische Geschwindigkeit der Moleküle M des Gases (kompressibler Fluidanteil) mindestens das 0,3-fache der Schallgeschwindigkeit des Gases beträgt.

In der dargestellten Ausführung wird die Kraft F_{B} also von der Zentrifugalkraft F_{Z} bereitgestellt. Die beschriebene thermodynamische Maschine mit einem Zentrifugalkonfusor und Zentrifugaldiffusor eignet sich damit auch zum Einsatz an Orten mit geringer Schwerkraft (z.B. im All).

In einer Ausführungsform wird bei den Anordnungen gemäß **Fig. 3** oder **Fig. 4a/4b** eine Mehrphasenströmung eingesetzt, bei der mit einem Phasenwechsel (Verdampfung/Kondensation) einer Komponente oder einer reversiblen chemischen Reaktion gearbeitet wird. Wird z.B. ein Gemisch aus Wasser und Isobutan bei 4bar und 300K in den Konfusor 2 geleitet sind beide Komponenten flüssig. Durch die Beschleunigung im Konfusor 2 sinkt der Druck und das Isobutan erreicht seinen Siedepunkt. Durch Zuführung von Rotations- und Vibrationsenergie (der Moleküle M) des flüssigen Wassers kann es verdampfen. Die Erhöhung des Volumens beschleunigt die Strömung zusätzlich. An der Strömungsmaschine 1 wird ein Teil der kinetischen Energie abgegeben. Die Strömung wird danach durch die Gravitationskraft oder die Zentrifugalkraft lateral beschleunigt. Durch den erhöhten Druck im Diffusor 3 und/oder im folgenden Verdichter 5 kondensiert das Gas bei starker Verringerung des Volumens. Die dabei abgegebene Energie muss aber nicht extern abgeführt werden, sondern wird in Form von volumenunabhängiger Vibrations- und Rotationsenergie im Kreislauf gespeichert.

Beim Einsatz eines Wasser-Kohlendioxid Gemisches löst sich das Kohlendioxid im Wasser und reagiert zu Kohlensäure. Beim Druckabfall im Konfusor 2 verringert sich das Gleichgewicht der Lösung und es tritt gasförmiges Kohlendioxid im Strömungskanal aus und beschleunigt die Strömung. Da sich in der Lösung ein Konzentrationsgleichgewicht einstellt ist hier ein gleichmäßiger Gasaustritt zu erwarten. Nach der Energieabgabe an der Strömungsmaschine und Beschleunigung im Strömungskanal geht das Gas durch die Druckerhöhung im Diffusor 3 und/oder im folgenden Verdichter 5 wieder in Lösung über und verringert das Volumen der Mehrphasenströmung. Kohlendioxid reagiert dann mit dem Wasser zu Kohlensäure.

Die Auswahl der Komponenten hat wesentlichen Einfluss auf den Arbeitsdruck. Bei Stoffen mit niedrigem Dampfdruck (z.B. Isopropanol/Wasser Gemisch) kann der Druck vor dem Konfusor 2 weniger als 1 bar betragen. Dies vereinfacht die Konstruktion. Wegen der hohen Dichte des flüssigen Wassers ist die Energiedichte und der Entropiestrom dennoch sehr hoch. Damit kann eine sehr hohe Geschwindigkeit und Energieabgabe an der Strömungsmaschine bei kompakten Dimensionen erreicht werden.

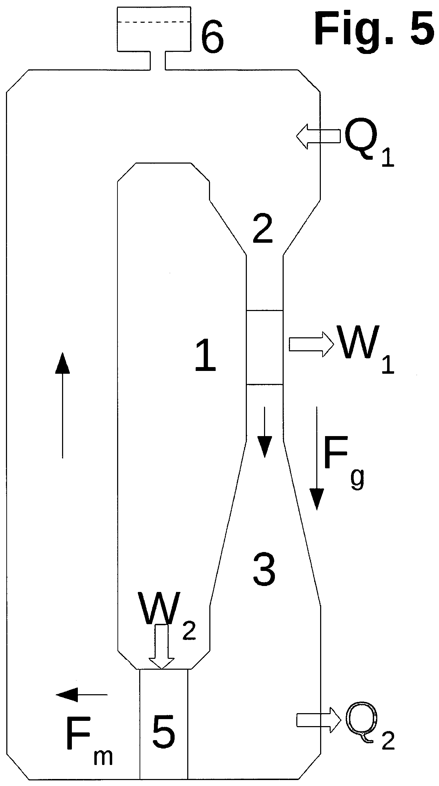

**Fig. 5** zeigt einen Gravitationsdiffusor als weitere Anordnung zur Nutzung des erfindungsgemäßen Verfahrens. Ein Fluid wird in dem Konfusor 2 beschleunigt und der Strömungsmaschine 1 zugeführt. Der Strömungskanal und Diffusor 3 sind in Gravitationsrichtung angeordnet wodurch die Gravitationskraft F_{G} als Kraft F_{B} wirkt und die Moleküle M des Fluids durch Umwandlung von potentieller Energie in kinetische Energie beschleunigt. Die Maschine wird so dimensioniert, dass das Volumen zwischen Verdichter 5 und Konfusor 2 größer ist als das Volumen zwischen Strömungsmaschine 1 und Verdichter 5. Alternativ kann ein Druckausgleichsgefäß 6 angebracht werden. Damit erzeugt der Verdichter 5 einen Unterdruck an der Strömungsmaschine 1 der den Wirkungsgrad erhöht. Zwischen dem Verdichter 5 und dem Konfusor 2 wird eine thermische Energie Q₁ zugeführt. Optional kann zwischen dem Diffusor 3 und dem Verdichter 5 eine thermische Energie Q₂ abgeführt werden.

Da bei Strömungsmaschinen 1 nur die relative Geschwindigkeit der Strömung für die Energiezufuhr relevant ist, kann Energie in einem schmalen Strömungskanal bei hoher Geschwindigkeit mit einer Strömungsmaschine 1 entnommen werden und in einem breiteren Strömungskanal bei geringer Geschwindigkeit zugeführt werden. Wegen *E* = *m*/2 * *v*² wird bei hoher Geschwindigkeit mehr Energie abgegeben als bei geringer Geschwindigkeit zugeführt wird. Die durch den Verdichter 5 zugeführte mechanische Kraft (Fₘ) wirkt wie die Gravitationskraft F_{g} und senkt den Druck hinter der Strömungsmaschine 1. Dazu wird zwischen Verdichter 5 und Konfusor 2 das Druckausgleichsgefäß 6 angebracht welches den Druck am Eingang des Konfusors 2 konstant hält. Bei kompressiblen Medien kann der Druckausgleich auch durch ein großes Volumen vor dem Konfusor 2 im Vergleich zum Volumen zwischen Diffusor 3 und Verdichter 5 erreicht werden. Bei offenen Prozessen kann die umgebende Atmosphäre den Druckausgleich übernehmen. Wird dem Verdichter/Kompressor 5 mechanische Arbeit zugeführt, sinkt der Druck am Ausgang des Diffusors 3. Damit kann der Druck am Ausgang der Strömungsmaschine 1 fast auf Null sinken was hohe Strömungsgeschwindigkeiten und damit einen hohen Wirkungsgrad ermöglicht. Dazu muss ausreichend Energie für die Beschleunigung im Konfusor 2 zur Verfügung stehen, die durch einen hohen Anteil an Vibrations- und Rotationsenergie (bei komplexen Molekülen M oder Mehrphasenströmungen) bereitgestellt werden kann. Damit wird das Fluid auch ohne Laval Düse auf Überschall beschleunigt. Da die thermische Energie Q₁ nicht bei einer hohen Temperatur zugeführt werden muss, sondern erst bei Verringerung der relativen translatorischen Geschwindigkeit der Moleküle M innerhalb der Strömung übertragen wird erhöht sich die volumenwirksame Wärmekapazität und damit der Entropiestrom I_{S} an der Arbeitsmaschine 1. Wegen *P = T* * *I_{S}* (P = Leistung, T = Temperatur, Entropiestrom) steigt damit bei konstanter Eingangstemperatur die Leistung P.

Der Verdichter/Kompressor 5 sollte in der Nähe des tiefsten Punkts im Kreisprozess angeordnet werden. Die zum Betrieb der Verdichter 5 erforderliche Energie W₂ kann teilweise oder vollständig durch die an der Strömungsmaschine 1 freigesetzte mechanische Energie W₁ zugeführt werden.

Das bei der Anordnung gemäß **Fig. 5** genutzte Fluid kann als Reinstoff (ein Gas), Gasgemisch oder als Mischung aus Gas und Flüssigkeit vorliegen. Bei einem aus Gas oder aus einem Gasgemisch bestehenden Fluid wird auch hier das Fluid nach der Strömungsmaschine auf mindestens 0,3-fache Schallgeschwindigkeit des Fluids beschleunigt, sodass damit der an der Strömungsmaschine verringerte Druck des Fluids wieder auf mindestens das 0,1-fache des Drucks des Fluids vor der Strömungsmaschine erhöht wird und somit die zur Wirkungsgradsteigerung der Strömungsmaschine notwendige Druckverringerung direkt nach der Strömungsmaschine erreicht wird. Bei einem Fluid, welches aus einem Gemisch aus Gas und Flüssigkeit gebildet ist, wird die Druckverringerung direkt nach der Strömungsmaschine erreicht, wenn die Geschwindigkeit v₂ des Fluids zumindest so hoch ist, dass die translatorische Geschwindigkeit der Moleküle M des Gases (kompressibler Fluidanteil) mindestens das 0,3-fache der Schallgeschwindigkeit des Gases beträgt.

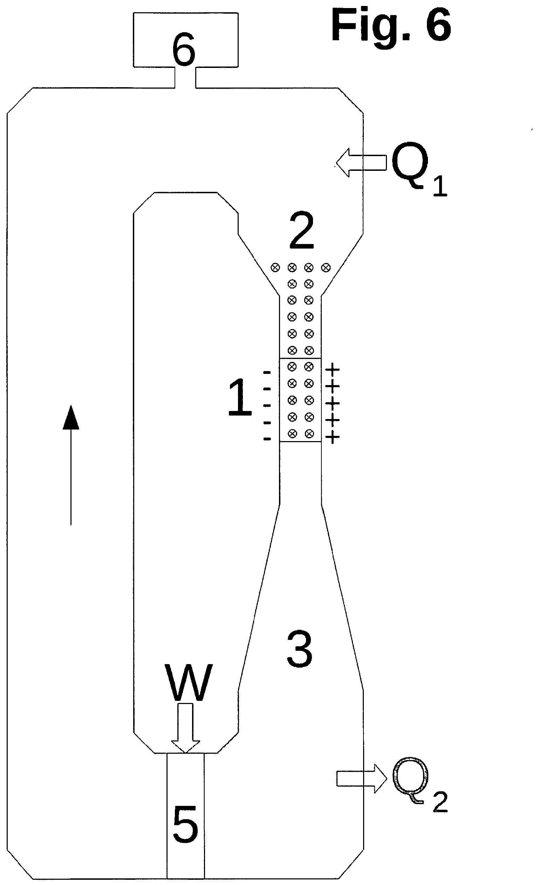

**Fig. 6** zeigt einen thermodynamischen Kreisprozess mit einer als MHD Generator ausgestalteten Strömungsmaschine als weitere Anordnung zur Nutzung des erfindungsgemäßen Verfahrens. Als Arbeitsmedium wird ein Gemisch aus einem Elektrolyt (z.B. ionisierte Lösung) und einem kompressiblen Fluid verwendet. Das Gemisch wird im Konfusor 2 beschleunigt und strömt durch ein Magnetfeld der als MHD-Generator ausgestalteten Strömungsmaschine 1. Dabei werden die Ladungsträger des Elektrolyts nach links oder rechts abgelenkt und die elektrische Energie wird über die Elektroden abgeführt. Im Diffusor 3 wird die Strömungsgeschwindigkeit verlangsamt, wobei translatorische Energie in Vibrations- und Rotationsenergie umgewandelt wird.

Das Fluid wird im Verdichter 5 komprimiert und strömt zum Konfusor 2 zurück. Das Volumen zwischen Verdichter 5 und Konfusor 2 muss größer sein als das Volumen zwischen MHD Generator und Verdichter 5. Alternativ kann ein Druckausgleichsgefäß 6 angebracht werden. Damit erzeugt der Verdichter 5 einen Unterdruck hinter dem MHD Generator der die Strömung beschleunigt und den Wirkungsgrad erhöht. Die thermische Energie Q₁ wird vor dem Konfusor 2 zugeführt. Optional kann nach dem Diffusor 3 thermische Energie Q₂ abgeführt werden.

Ein Vorteil dieser Anordnung ist eine höhere erreichbare magnetische Feldstärke in dem schmalen Strömungskanal gegenüber dem erweiterten Strömungskanal einer Laval Düse. Weiterhin ist die Ladungsträgerdichte des Elektrolyts hoch, was kompakte Abmessungen der Maschine ermöglicht. Der Prozess kann im Gegensatz zur Verwendung eines ionisierten Gases auch bei Umgebungstemperatur ablaufen, was die Anforderungen an die Materialien und die Kosten verringert.

### Bezugszeichenliste

- M: Molekül
- 1: Strömungsmaschine
- 1.1: Gehäuse
- 2: Konfusor
- 3: Diffusor
- 4: Rotationsachse
- 5: Verdichter
- 5.1: Verdichter
- 5.2: Verdichter
- 6: Ausgleichsgefäß

## Patentansprüche

1. Verfahren zum Betreiben einer Strömungsmaschine (1), wobei ein durch die Strömungsmaschine (1) geführtes Fluid kinetische Energie an die Strömungsmaschine (1) überträgt, wobei
das Fluid oder zumindest ein Fluidanteil des Fluids kompressibel ist und dass das kompressible Fluid in Strömungsrichtung vor der Strömungsmaschine (1) in einem Konfusor (2) beschleunigt wird und dass der Strömungsmaschine in Strömungsrichtung ein Diffusor (3) nachgelagert ist und dass die an der Strömungsmaschine (1) bei der Übertragung der kinetischen Energie verringerte Strömungsgeschwindigkeit des Fluids direkt nach der Strömungsmaschine (1) durch eine mit einem Kraftfeld erzeugte und in Strömungsrichtung wirkende Kraft F_{B} durch Umwandlung potentieller Energie des Fluids in kinetische Energie des Fluids soweit erhöht wird, dass damit der an der Strömungsmaschine (1) verringerte Druck des Fluids wieder auf mindestens das 0,1-fache des Drucks des Fluids vor der Strömungsmaschine (1) erhöht wird, wobei die in Strömungsrichtung wirkende Kraft F_{B} die Gravitationskraft, eine Zentrifugalkraft, eine Magnetkraft, eine elektrische Kraft oder eine durch eine weitere Strömungsmaschine bereitgestellte mechanische Kraft ist.

2. Verfahren nach Anspruch 1, wobei das Fluid eine Mehrphasenströmung ist und zumindest ein Fluidanteil gasförmig und ein anderer Fluidanteil des Fluids flüssig ist.

3. Verfahren nach Anspruch 1, wobei als kompressibles Fluid eine Fluidmischung aus einem ersten Medium und einem zweiten Medium eingesetzt wird und dass das erste Medium einen niedrigeren Dampfdruck als das zweite Medium aufweist und dass das erste Medium sowohl bei der Beschleunigung am Konfusor (2), als auch nach der Strömungsmaschine (1) flüssig ist und dass das zweite Medium bei der Beschleunigung am Konfusor zumindest teilweise gasförmig und nach dem Diffusor (3) flüssig ist.

4. Verfahren nach Anspruch 1, wobei als kompressibles Fluid eine Fluidmischung aus einem ersten Medium und einem zweiten Medium eingesetzt wird, wobei das erste Medium ein Gas und das zweite Medium eine Flüssigkeit ist und dass das erste Medium und das zweite Medium derart ausgewählt sind, dass das erste Medium vor der Beschleunigung am Konfusor (2) im zweiten Medium gelöst ist, das erste Medium bei der Beschleunigung dieser Lösung am Konfusor (2) durch ein Absinken des Druckes im Konfusor als Gas aus der Lösung heraustritt und nach dem Diffusor (3) durch eine Druckerhöhung wieder im zweiten Medium gelöst ist.

5. Verfahren nach einem der vorgenannten Ansprüche, wobei die Strömungsmaschine (1) eine Turbine oder ein magnetohydrodynamischer Generator ist.

## Claims

1. Method for operating a turbomachine (1), wherein a fluid guided through the turbomachine (1) transmits kinetic energy to the turbomachine (1), the fluid, or at least one fluid component of the fluid, is compressible, and the compressible fluid is accelerated upstream of the turbomachine (1) in the direction of flow in a convergent nozzle (2), and a divergent nozzle (3) is arranged downstream of the turbomachine in the direction of flow, and the flow velocity of the fluid, which is reduced in the turbomachine (1) during the transmission of the kinetic energy, is increased directly downstream of the turbomachine (1) by a force F_{B}, generated by a force field and acting in the direction of flow, by converting potential energy of the fluid into kinetic energy of the fluid to such an extent that the pressure of the fluid, which is reduced in the turbomachine (1), is thereby increased again to at least 0.1 times the pressure of the fluid upstream of the turbomachine (1), wherein the force F_{B} acting in the direction of flow is the gravitational force, a centrifugal force, a magnetic force, an electrical force or a mechanical force provided by a further turbomachine.

2. Method according to claim 1, wherein the fluid is a multiphase flow and at least one fluid component is gaseous and another fluid component of the fluid is liquid.

3. Method according to claim 1, wherein a fluid mixture consisting of a first fluid and a second fluid is used as the compressible fluid, and the first fluid has a lower vapour pressure than the second fluid, and the first fluid is liquid both during acceleration at the convergent nozzle (2) and downstream of the turbomachine (1), and the second fluid is at least partially gaseous during acceleration at the convergent nozzle (2) and liquid downstream of the divergent nozzle (3).

4. Method according to claim 1, wherein a fluid mixture consisting of a first medium and a second medium is used as the compressible fluid, wherein the first medium is a gas and the second medium is a liquid, and wherein the first medium and the second medium are selected in such a way that the first medium is dissolved in the second medium before acceleration at the convergent nozzle (2), and the first medium is released from the solution as a gas during acceleration of this solution at the convergent nozzle (2) as a result of a drop in the pressure in the convergent nozzle (2), and is dissolved again in the second medium downstream of the diffuser (3) as a result of an increase in pressure.

5. Method according to one of the preceding claims, wherein the turbomachine (1) is a turbine or a magnetohydrodynamic generator.

## Revendications

1. Procédé pour faire fonctionner une turbomachine (1), dans lequel un fluide guidé dans la turbomachine (1) transmet de l'énergie cinétique à la turbomachine (1), dans lequel le fluide ou au moins un composant fluide du fluide est compressible, et dans lequel le fluide compressible, en amont de la turbomachine (1), est accéléré dans le sens de l'écoulement dans un convergent (2), et dans lequel un diffuseur (3) est situé en aval de la turbomachine dans le sens d'écoulement, et dans lequel la vitesse d'écoulement du fluide réduite au niveau de la turbomachine (1) lors du transfert de l'énergie cinétique du fluide, directement après la turbomachine (1), est augmentée par une force F_{B} générée par un champ de force et agissant dans le sens d'écoulement, par la conversion de l'énergie potentielle du fluide en énergie cinétique du fluide, de sorte que la pression du fluide réduite au niveau de la turbomachine (1) soit de nouveau augmentée à au moins 0,1 fois la pression du fluide en amont de la turbomachine (1), la force F_{B} qui agit dans le sens de l'écoulement étant la force gravitationnelle, une force centrifuge, une force magnétique, une force électrique ou une force mécanique générée par une autre turbomachine.

2. Procédé selon la revendication 1, dans lequel le fluide est un écoulement multiphasique et au moins un composant fluide du fluide est gazeux et un autre composant fluide du fluide est liquide.

3. Procédé selon la revendication 1, **caractérisé en ce qu'**un mélange de fluides constitué d'un premier milieu et d'un second milieu est utilisé comme fluide compressible et **en ce que** le premier milieu présente une pression de vapeur inférieure à celle du second milieu et **en ce que** le premier milieu est liquide à la fois lors de l'accélération au niveau du convergent (2) et en aval de la turbomachine (1) et **en ce que** le second milieu est au moins partiellement gazeux lors de l'accélération au niveau du convergent (2) et liquide en aval du diffuseur (3).

4. Procédé selon la revendication 1, dans lequel un mélange de fluides constitué d'un premier milieu et d'un second milieu est utilisé comme fluide compressible, le premier milieu étant un gaz et le second milieu étant un liquide, et dans lequel le premier milieu et le second milieu sont sélectionnés de telle sorte que le premier milieu est dissous dans le second milieu avant l'accélération au niveau du convergent (2), que le premier milieu est évacué de la solution sous forme de gaz lors de l'accélération de cette solution au niveau du convergent (2) par une diminution de la pression dans le convergent (2) et qu'il est dissous à nouveau dans le second milieu en aval du diffuseur (3) par une augmentation de la pression.

5. Procédé conformément à l'une des revendications précédentes, dans lequel la turbomachine (1) est une turbine ou un générateur magnétohydrodynamique.
